# EUROPEAN PATENT APPLICATION

(11) **EP 4 749 348 A1**
(43) Date of publication of application: **27.05.2026**
(21) Application number: 24214932.6
(22) Date of filing: 22.11.2024
(51) Int. Cl.: G02B 27/01, G02B 7/00, B60K 35/23, B60K 35/50

(54) **HEAD-UP DISPLAY DEVICE**

(71) Applicant: Valeo Comfort and Driving Assistance, 94000 Créteil (FR)
(72) Inventor: MIHALKA, Peter, 94000 Créteil (FR); PARSA, Srilekha, 94000 Créteil (FR); BEN-NACHOUANE, Ayoub, 94000 Créteil (FR)
(74) Representative: Delplanque, Arnaud

(57) **Abstract**

The invention relates to a head up display device comprising a housing (6) and, inside the housing, a picture generation unit (2) configured to generate a light beam (3), and a folding mirror (9) attached to a first region (13) of an inner surface of the housing and configured to reflect the light beam, wherein an outer surface of the housing comprises a spacer structure (16) extending from a second region (18) of an outer surface of the housing, the first region and the second region forming two opposite sides of a same portion of a wall of the housing, the spacer structure being an integral part of the housing.

## Description

### TECHNICAL FIELD OF THE INVENTION

The invention relates to the field of display devices for automotive vehicles, and more precisely to the thermal management in such devices.

More precisely the invention relates to a head-up display device.

### BACKGROUND INFORMATION AND PRIOR ART

A head-up display device (hereafter "head-up display") is an optical system for projecting an image into the field of view of a driver of a vehicle, for example to enable him to access certain information relating to the driving or to the status of the vehicle (speed, GPS indications, etc.) without having to look away from the road. Typically, a head-up display comprises a picture generation unit (PGU) and an optical system for transmitting the image generated by the picture generation unit to a partially reflective (i.e. partially reflective and partially transparent) plate, e.g. the vehicle windshield or a partially reflective plate separated from the windshield (or windscreen) and dedicated to the display (known as a "combiner").

Some head-up displays enable the display of augmented reality images, i.e. images that appear, from the driver's point of view, to be integrated into the vehicle's environment. For example, arrows can be virtually projected onto the road (i.e. they appear, from the driver's point of view, to be projected onto the road) at a distance of a few meters from the vehicle. Also, obstacles or traffic signs can be virtually highlighted.

The virtual image (as perceived by the driver) displayed by an augmented reality head-up display has several characteristics. It is inclined at least 30° to the road or is parallel to the road, it has a luminance of at least 1000 cd.m², a contrast of at least 1500:1, and a width of at least 1 meter. Its brightness must be uniform.

Consequently, a head-up display suitable for providing a virtual image in augmented reality must include a picture generation unit capable of providing very high optical power, which generates very high heat, and an optical system that has a magnification factor of at least 20. Such an optical system, when subjected to solar radiation (which arrives in the opposite direction to the light beam generated by the display), risks strongly to magnify the sun's rays and increase the temperature of the head-up display.

In particular, the housing of the head-up display may reach temperatures as high as 135°C. Such temperatures may damage elements that are in the direct environment of the head-up display, for instance electric wires that run along the housing of the head-up display.

### SUMMARY OF THE INVENTION

Therefore, one object of the invention is to provide a solution to preserve the elements that are directly in the environment of the housing of the head-up display.

According to an aspect of the invention, it is provided a head up display device comprising a housing and, inside the housing, a picture generation unit configured to generate a light beam, and a folding mirror attached to (for instance, in contact with) a first region of an inner surface of the housing and configured to reflect the light beam, wherein an outer surface of the housing comprises a spacer structure extending from a second region of an outer surface of the housing, the first region and the second region forming two opposite sides of a same portion of a wall of the housing, the spacer structure being an integral part of at least a portion of the housing.

The term "integral" is to be understood here as made in a same piece of material or forming a continuity of material. For instance, two elements that are integral to each other may have been molded in a same mold with a same material or carved in a same block of material.

The spacer structure advantageously keeps any element in the vicinity of the second region at a minimal distance from the second region. Therefore, even if the temperature of the housing in the second region increases strongly, the elements in contact with the spacer structure will not be damaged. Furthermore, having a spacer structure integral with the housing simplify the assembling of the head up display.

According to an embodiment, the spacer structure comprises a wall extending orthogonally from the outer surface and having a free distal edge relatively to the outer surface.

According to an embodiment, the spacer structure extends along the outer surface from one extremity of the second region to another extremity of the second region.

According to an embodiment, the spacer structure has a height measured orthogonally to the outer surface of the housing at least equal to two centimeters.

According to an embodiment, the spacer structure is a honeycomb structure.

According to an embodiment, the head-up display comprises a plurality of substantially parallel and independent walls.

According to an embodiment, a thermal insulation foam is placed in contact with the second region, the wall extending in a direction orthogonal to the outer surface beyond the insulation foam.

According to an embodiment, the material of the spacer structure is adapted to resist to temperature below or equal to 130°C, preferably below or equal to 150°C, under a pressure of 1.8 MPa without deforming. In other words, the deflection temperature of the spacer structure is at least 130°C under a load of 1.8MPa.

According to an embodiment, the spacer structure and the housing are made of polycarbonate.

According to an embodiment, the housing and the spacer structure are realized by molding.

### DETAILED DESCRIPTION OF EXAMPLE(S)

The following description with reference to the accompanying drawings will make it clear what the invention consists of and how it can be achieved. The invention is not limited to the embodiment illustrated in the drawings. Accordingly, it should be understood that where features mentioned in the claims are followed by reference signs, such signs are included solely for the purpose of enhancing the intelligibility of the claims and are in no way limiting on the scope of the claims.
- Figure 1 is a schematic view of a head-up display according to an embodiment of the invention;
- Figure 2 is a perspective view of an upper part of a housing of the head-up display of figure 1.

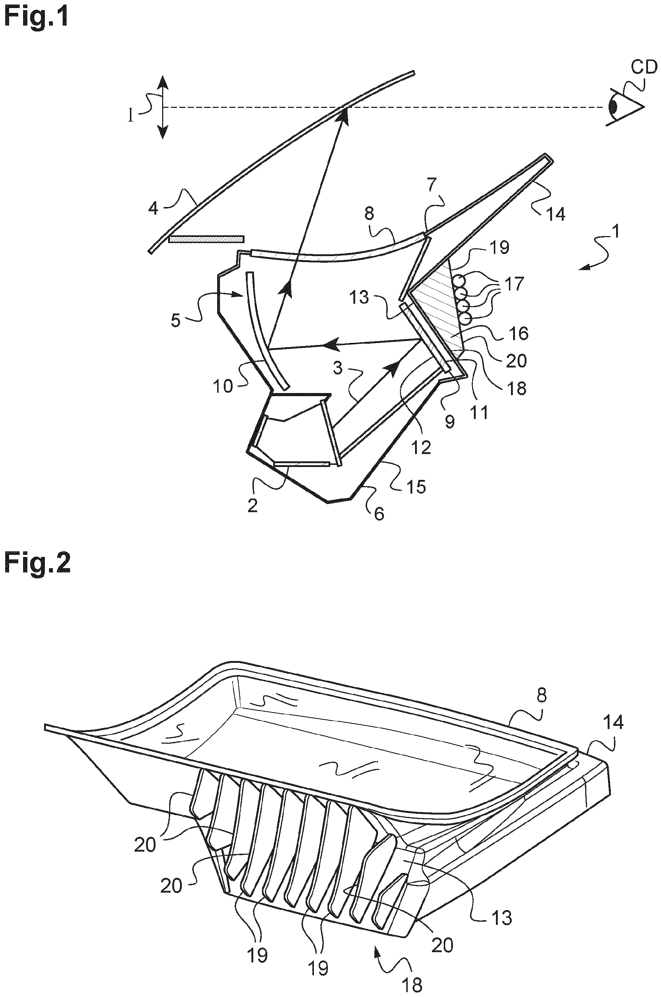

A head-up display according to an embodiment of the invention, as shown schematically in figure 1 and designated as a whole by the numerical reference 1, is configured to generate and display an augmented reality image I in the field of view of a driver CD of a motor vehicle, for example a car.

To this end, the head-up display 1 comprises a picture generation unit 2 configured to generate a light beam 3 corresponding to the image to be displayed, a partially transparent plate 4, for example a windshield of the vehicle, and an optical system 5 configured to reflect the light beam 3 towards the partially transparent plate 4. The picture generation unit 2 and the optical system 5 are enclosed in a housing 6 made in an opaque material. The housing 6 comprises an exit opening 7 through which the light beam 3 may exits the housing 6. Here, the exit opening 7 is physically closed by a transparent cover window 8.

The optical system 5 is here a magnifying optical system configured to reflect and magnify the image provided by the picture generation unit 2. To this end, it comprises a first mirror 9, generally called a folding mirror, and a second mirror 10.

The folding mirror 9 is configured to receive the light beam 3 from the image generating device 2 on its reflective face and reflect it toward the second mirror 10. Here, the folding mirror 9 is a planar mirror comprising a non-reflective face 11 and a reflective face 12 opposite to the non-reflective face 11. The folding mirror 9 is attached to an inner surface of the housing 6. For instance, the non-reflective face 11 is facing the inner surface and comprise fixation means configured to fix the folding mirror 9 to the inner surface, for instance an adhesive material, screws, or a clipping system. The folding mirror 9 may be placed in contact with the inner surface, or a space (a volume of air) may be left between the folding mirror 9 and the inner surface.

A first region 13 is here defined on the inner surface of the housing 6 and corresponds to the region of the inner surface which is in vis-a-vis of the non-reflective face 11 of the folding mirror 9. For instance, the first region 13 is an orthogonal projection of the first face on the inner surface of the housing 6. On the outer wall of the housing 6 is defined a second region 18, the outline of which corresponds to the outline of the first region 13. In other words, the first region 13 and the second region 18 form two opposite sides (or faces) of a same portion of the wall of the housing 6.

In this example, the second mirror 10 is a concave mirror and is configured to reflect and focus the light beam 3 (reflected by the folding mirror 9) toward the windshield 4 of the vehicle through the exit opening 7.

In this embodiment, the housing 6 comprises two distinct portions. A first portion 14, or upper portion, comprises the exit opening 7 and the first region 13. A second portion 15, or lower portion, encloses the picture generation unit 2. The second mirror 10 is here attached to an inner surface of the second portion. For instance, the first portion 14 and the second portion 15 are attached together by clipping.

Because of the high optical power provided by the picture generation unit 2, and because of the possible presence of sun rays that are incident onto the optical system in a direction opposite to the light beam 3, the temperature of the head-up display 1 may increase. Specifically, the folding mirror 9 may absorb some of the optical power, and then transfer the accumulated heat to the wall of the housing, here to the wall of the first portion 14.

In order to avoid damage to any element which would be too close from the housing, in particular too close to the second region 18, the head-up display 1 comprises a spacer structure 16, in particular here a structure configured to keep any object in the vicinity of the head up display 1 at distance from the second region 18. In this embodiment, the spacer structure is configured to keep an element external to the head-up display, such as a plurality of wires 17 away from the second region. The spacer structure is integral with the first portion 14 of the housing. For instance, the first portion and the spacer structure are realized together by molding (one molding operation, in a same mold with a same material). For instance, the housing and the spacer structure are made in a material having a thermal conductivity lower than 0.3 W.m⁻¹.K⁻¹, for instance a polymer material, here polycarbonate. For instance, the polycarbonate *"Makrolon*^{®} *2205',* from the company *"Covestro Deutschland AG"* is a suitable material. Here, the spacer structure is reinforced with fiber glass.

Here, the spacer structure 16 comprises at least a wall 17 extending from the outer surface in the second region 18, orthogonally to the outer surface and from one extremity of the second region to another extremity. As apparent in figure 2, the spacer structure of this embodiment comprises a plurality of parallel walls 19, for instance at least three parallel wall, and in this example ten parallel walls 19. Here, each parallel wall 19 is a polygonal wall and comprises a free distal edge 20 intended to contact an external element such as wires. A distal edge is understood here as an edge of the wall that does not extend directly from the outer surface (the edge does not begin nor end on the surface of the second region. The distal edge 20 may be parallel to the outer surface in the second region or, as illustrated on the figures, slightly tilted with respect to the outer surface.

Each pair of walls 19 delimits a free space over the outer surface that permits in this example to evacuate the heat from the housing. Here, the distance between each wall 19 is comprised between five millimeters and fifty millimeters.

Here, the spacer structure 16 has a minimal dimension measured orthogonally to the outer surface in the second region comprised between one centimeter and five centimeters. For instance, in this example, the minimal dimension is equal to two centimeters. Here, each of the walls has a minimal dimension measured orthogonally to the outer surface equal to two centimeters. Consequently, the wires 17 that pass above the second region are at least at a distance of two centimeters from the outer surface.

The invention is not limited to the embodiment described above in connection to figure 1 and 2.

For instance, it has been described a spacer structure comprising a plurality of parallel walls, i.e. independent walls. Other embodiments comprise a spacer structure comprising a plurality of interconnected walls, that form for instance a regular pattern. For instance, the plurality of interconnected walls may form a honeycomb pattern.

It has been described a spacer structure comprising walls orthogonal to the outer surface. Other embodiments comprise a spacer structure in which the walls form an angle with the outer surface.

In an embodiment of the invention, the spacer structure comprises walls forming ribs.

The invention is not limited to a spacer structure and a first portion of the housing made with polycarbonate, but is compatible with any material, preferably material that can resist to high temperatures, for instance temperatures as high as 150°C.

Although it has been described a spacer structure comprising free spaces that permit to evacuate the heat, in other embodiments of the invention, insulation foam may be applied on the outer surface of the housing, in at least some of the free spaces between two pair of walls, in order to prevent or limit the heat transfer. In these embodiments, the thickness (dimension measured in a direction orthogonal to the outer surface in the second region) of the insulation foam is lower than the maximum height of the spacer structure, so that the wires 17 are not in contact with the foam.

The head-up display described above is intended to be used in a car, but the invention is not limited to this example and the head-up display according to the invention may be used in any automotive vehicles, for instance trucks, buses, planes, helicopters, boats.

It has been described a folding mirror attached to the inner surface of the housing with fixation means being an adhesive material, screws or a clipping system. In other embodiments, the mirror is glued on the inner surface and an air gap is maintained between the folding mirror and the housing. In other embodiments, a soft material, for instance foam, is placed between the folding mirror and the housing to avoid a rigid mechanical contact with the housing material.

The housing 6, at the location of the second region may be made of a thermally-conductive material, whereas the spacer structure 16 may be made of thermally-insulated material.

Advantageously, this enables to cool the head up display device 1, by enabling the heat to be transmitted through the second region, while enabling the insulation elements that are in the direct environment of the head-up display, which rest on the the spacer structure 16 made of thermally-insulated material

In an alternative embodiment, the spacer structure 16 is formed by overmolding on the housing 6 or is attached thereon, thanks to fixation means, instead of being an integral part of at least a portion of the housing 6.

## Claims

1. Head up display device comprising a housing (6), and, inside the housing (6), a picture generation unit (2) configured to generate a light beam (3), and a folding mirror (9) attached to a first region (13) of an inner surface of the housing (6) and configured to reflect the light beam (3), wherein an outer surface of the housing (6) comprises a spacer structure (16) extending from a second region (18) of an outer surface of the housing (6), the first region (13) and the second region (18) forming two opposite sides of a same portion of a wall of the housing, the spacer structure (16) being an integral part of at least a portion of the housing (6).

2. Head up display according to claim 1, wherein the spacer structure (16) comprises a wall (19) extending orthogonally from the outer surface and having a free distal edge (20) relatively to the outer surface.

3. Head up display according to claim 1 or 2 wherein the spacer structure (16) extends along the outer surface from one extremity of the second region (18) to another extremity of the second region (18).

4. Head up display according to any one of claims 1 to 3, wherein the spacer structure (16) has a height measured orthogonally to the outer surface of the housing (6) at least equal to two centimeters.

5. Head up display according to any one of claims 1 to 4, wherein the spacer structure (16) is a honeycomb structure.

6. Head up display according to any one of claims 1 to 5, comprising a plurality of substantially parallel and independent walls (19).

7. Head-up display according to any one of claims 1 to 6, wherein a thermal insulation foam is placed in contact with the second region (18), the wall (19) extending in a direction orthogonal to the outer surface beyond the insulation foam.

8. Head-up display according to any one of claims 1 to 7, wherein the material of the spacer structure (16) is adapted to resist to temperature below or equal to 130°C under a pressure of 1.8 MPa without deforming.

9. Head-up display according to any one of claims 1 to 8, wherein the spacer structure (16) and the housing (6) are made of polycarbonate.

10. Head-up display according to any one of claims 1 to 9, wherein the housing (6) and the spacer structure are realized by molding.
